**Europäisches Patentamt**

**European Patent Office**

**Office européen des brevets**

(19)

(11) Veröffentlichungsnummer: **0 036 571**
**B1**

(12) ## EUROPÄISCHE PATENTSCHRIFT

(45) Veröffentlichungstag der Patentschrift:
**21.11.84**

(51) Int. Cl.³: **B 23 K 7/04**

(21) Anmeldenummer: **81101817.5**

(22) Anmeldetag: **12.03.81**

(54) Vorrichtung zum Schneiden der Wandung eines Werkstücks in einer geschlossenen Schnittfläche.

(30) Priorität: **24.03.80 DE 3011256**

(43) Veröffentlichungstag der Anmeldung:
**30.09.81 Patentblatt 81/39**

(45) Bekanntmachung des Hinweises auf die Patenterteilung:
**21.11.84 Patentblatt 84/47**

(84) Benannte Vertragsstaaten:
**BE DE FR GB IT NL SE**

(56) Entgegenhaltungen:
**DE - A - 2 715 465**
**DE - A - 2 739 200**
**DE - B - 2 261 958**

(73) Patentinhaber: **Klöckner Opladen GmbH,**
**Stauffenbergstrasse 14 - 20, D-5090 Leverkusen 3 (DE)**

(72) Erfinder: **Noll, Hans, Am Werth 16,**
**D-5090 Leverkusen 1 (DE)**

(74) Vertreter: **Patentanwaltsbüro Cohausz & Florack,**
**Postfach 14 01 47, D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft eine Vorrichtung zum Schneiden der Wandung eines Rohres in einer geschlossenen Schnittfläche mittels eines Brenners, der auf dem Träger, der während des Schneidens um eine Achse der Schnittfläche umläuft, in einer zu dieser Achse radialen Richtung verstellbar ist, während das Rohr stillsteht.

Die Vorrichtung gemäß der Erfindung ist insbesondere bestimmt zum Schneiden eines Lochs längs der Durchdringungslinie eines schräg in das Rohr einlaufenden Rohres geringeren Durchmessers, wobei die Rohre eine so große Wandstärke haben, daß die Schnittfläche einen Winkel gegenüber dem Radius des Rohres hat, der sich längs der Durchdringungskurve ändert.

Es sind Vorrichtungen zum Schneiden eines einem einlaufenden Rohr entsprechenden Lochs in der Wandung eines um seine Achse während des Schneidens hin- und hergedrehten Rohres großen Durchmessers bekannt (z. B. DE-A 2 739 200) bei denen ein Schneidbrenner längs einer zur Achse des letztgenannten Rohres parallelen Richtung nach einem vorbestimmten Programm bewegt wird und während dieser Bewegung die Achse des Brenners geschwenkt wird. Solche Vorrichtungen sind jedoch nur geeignet für Fälle, in denen der Durchmesser des Rohres eine gewisse Größe nicht überschreitet. Es ist ferner eine Vorrichtung nach dem Oberbegriff des Anspruchs 1 bekannt, durch die in ein nicht bewegtes Rohr ein der Durchdringungskurve dieses Rohres mit einem schräg einlaufenden Rohr entsprechendes Loch durch einen Brenner geschnitten wird, der um eine Achse der Schnittfläche umläuft, wobei die Achse des Brenners geschwenkt werden kann (DE-AS 2 261 958).

Diese Vorrichtungen erfordern eine Steuerung der Bewegungen des Brenners durch erfahrene Fachleute und führen bei geringster Unaufmerksamkeit zu erheblichen Fehlern.

Aufgabe der Erfindung ist es, eine Vorrichtung zu schaffen, die die gewünschte Schnittfläche automatisch erzeugt.

Diese Aufgabe wird gemäß der Erfindung dadurch gelöst, daß die Vorrichtung eine Einrichtung zum Bewegen des Brenners auf dem Träger in der genannten radialen Richtung, eine Einrichtung zum Steuern dieser Einrichtung in Abhängigkeit von dem Umlaufen des Brenners, die aus einem Computer bestehen kann und eine Einrichtung zum Schwenken der Achsrichtung des Brenners in einer durch den Träger und die Umlaufachse gehenden Ebene in Abhängigkeit von der genannten radialen Bewegung des Brenners nach einem vorbestimmten Programm derart, daß in Richtung der Brennerachse die Spitze des Brenners in konstantem Abstand von einer Oberfläche des Rohres gehalten wird. Die Steuerung zum Steuern der Längsbewegung und der Schwenkbewegung des Brenners besteht vorzugsweise aus einer Kurvenscheibe, die um eine Achse schwenkbar ist und die bei der Längsbewegung des Brenners auf dem Träger in gleicher Weise längsbewegt wird, und deren Kurve an einem Fühler abläuft.

Die Erfindung ist in der nachfolgenden Beschreibung eines Ausführungsbeispiels näher erläutert.

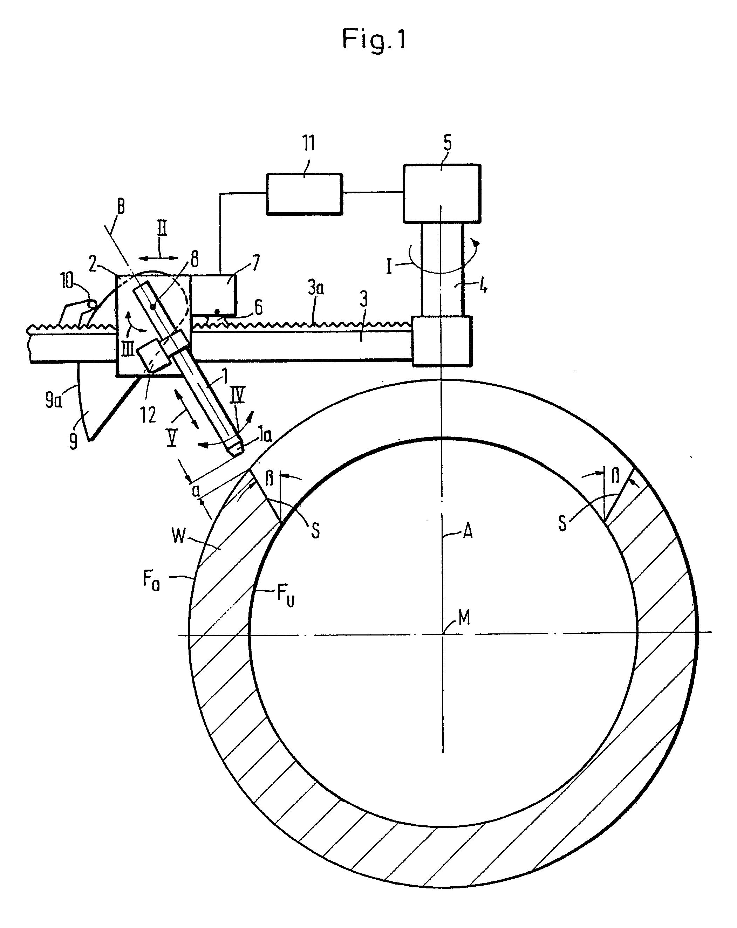

Fig. 1 zeigt einen Querschnitt durch einen Teil eines Rohres, in dessen Mantel ein Loch durch einen Brenner geschnitten werden soll, sowie schematisch die Vorrichtung zum Schneiden dieses Lochs;

Fig. 2 zeigt die gleiche Anordnung in einem dazu rechtwinkligen Schnitt, der durch die Achse des Rohres geht;

Fig. 3 zeigt eine Kurvenscheibe für die Vorrichtung gemäß der Erfindung.

Die Vorrichtung besteht aus einem Brenner 1, der von einem Schlitten 2 getragen wird, der auf einem Träger 3 verschiebbar ist, der an einer durch den Mittelpunkt M eines Rohres W umlaufenden, von einem Motor 5 angetriebenen Welle 4 befestigt ist und sich in radialer Richtung zu dieser Achse A erstreckt. Der Träger 3 trägt eine Zahnstange 3a, in die ein Ritzel 6 eingreift, das durch einen am Schlitten 2 angebrachten Motor 7 angetrieben wird. Der Brenner 1 wird von einer im Schlitten 2 gelagerten Welle 8 getragen, auf der eine Schablone 9 befestigt ist. Am Träger 3 ist ein Anschlag 10 angeordnet, dessen Abstand vom Träger 3 ebenso groß ist wie der Abstand der Achse 8 vom Träger 3.

Während des Umlaufs der Welle 4 in Richtung des Pfeiles I wird der Schlitten 2 in Richtung des Pfeils II mittels des Motors 7 verschoben, der von einem Computer 11 in Abhängigkeit vom Umlauf der Welle 4 gesteuert wird. Bei der Bewegung des Schlittens 2 gemäß dem Pfeil II wird die ständig an den Anschlag 10 angedrückte Schablone 9 entsprechend dem Pfeil III bewegt. Dadurch wird der Brenner 1 entsprechend dem Pfeil IV bewegt. Die Kurve 9a der Kurvenscheibe 9 ist derart ausgebildet, daß die Richtung der Achse B des Brenners 1 stets den gewünschten Winkel $\beta$ zur Achse A hat, und daß der Abstand a der Spitze 1a des Brenners 1 von der Oberfläche Fo des Rohres W konstant ist. Auf diese Weise wird die gewünschte Schnittlinie S erzeugt.

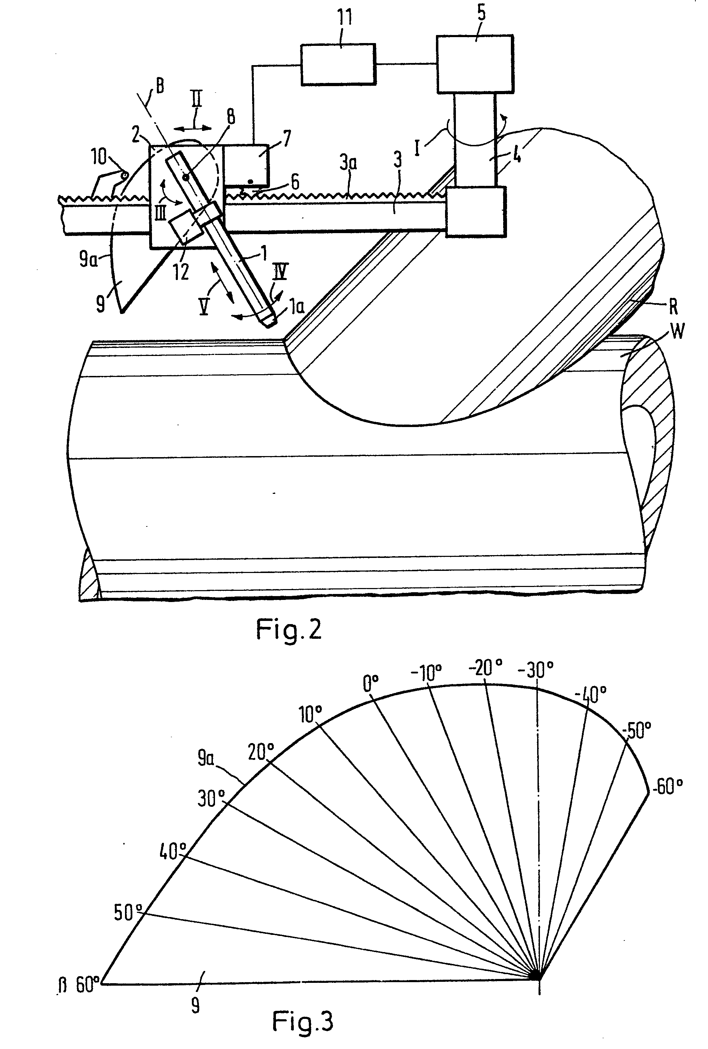

Der Brenner 1 ist überdies in seiner Achse B mittels eines Motors 12 derart verschiebbar, daß die Brennerspitze 1a während eines Teils des Umlaufs der Welle 4 in dem dargestellten Abstand a von der Fläche Fo des Rohres W ist, während eines anderen Teils des Umlaufs der Welle 4 in einem Abstand a von der Fläche Fu ist und in den Bereichen zwischen diesen beiden Teilen des Umlaufs der Welle 4 von der einen Stellung zur anderen wandert. Diese Bewegung ist insbeondere von Bedeutung bei dem Abschneiden des in das Rohr W einlaufenden Rohres R (Fig. 2).

Die Kurve 9a der in Fig. 3 dargestellten Schablone 9 entspricht der Gleichung.

## Patentansprüche

1. Vorrichtung zum Schneiden der Wandung eines gegenüber der Vorrichtung nicht bewegten Rohres (W) in einer geschlossenen Schnittfläche (S) mittels eines Brenners (1), der auf einem Träger (3), der während des Schneidens um eine Achse (A) der Schnittfläche umläuft, in einer zu dieser Achse radialen Richtung verstellbar und seine Achsrichtung (B) in einer durch den Träger (3) und die Umlaufachse (A) gehenden Ebene schwenkbar ist, dadurch gekennzeichnet, daß sie eine Einrichtung (7) zum Bewegen des Brenners (1) auf dem Träger (3) in der genannten radialen Richtung, eine Vorrichtung (11) zum Steuern dieser Einrichtung (7) in Abhängigkeit von dem Umlaufen des Brenners (1) und eine Einrichtung (9) aufweist zum Schwenken der Achsrichtung (B) des Brenners (1) in Abhängigkeit von der genannten radialen Bewegung des Brenners nach einem vorbestimmten Programm derart, daß in Richtung der Brennerachse die Spitze (1a) des Brenners (1) in konstantem Abstand von einer Oberfläche des Rohres (W) gehalten wird.

2. Vorrichtung nach Anspruch 1, dadurch gekennzeichnet, daß sie zusätzlich eine Einrichtung (12) zum Vorschieben des Brenners (1) quer zur Richtung des Trägers (3) aufweist.

3. Vorrichtung nach Anspruch 1 oder 2, dadurch gekennzeichnet, daß die Einrichtung (9) zum Steuern der Schwenkbewegung des Brenners (1) aus einer Kurvenscheibe besteht, die um eine Achse (8) schwenkbar ist und die bei der Längsbewegung des Brenners (1) auf dem Träger (3) in gleicher Weise längsbewegt wird, und deren Kurve (9a) an einem Fühler (10) abläuft.

4. Vorrichtung nach Anspruch 3, dadurch gekennzeichnet, daß die Kurvenscheibe (9) auf der Schwenkachse (8) des Brenners (1) sitzt.

## Claims

1. Device for cutting the wall of a pipe being not movable during the cutting process in a closed cut edge by means of a burner adjustably movable in a radial direction to the axis of said cutting edge on a carrier rotatable about said axis, said burner being tiltable in a plane coincident with said carrier and said axis, therein there are provided characterised therein that there are a means (7) for moving said burner (1) on said carrier (3) in said radial direction, a device (11) for controlling said means (7) in dependance of the rotation of the burner (1), and a means (9) for tilting the axial direction of the burner (1) in dependance of said radial movement of the burner in a predetermined program so that the tip (1a) of the burner (1) preserves a constant distance of a surface of the pipe.

2. Device according to claim 1 characterised therein that it further comprises a means (12) for advancing the burner (1) across the direction of the carrier (3).

3. Device according to claims 1 or 2 characterised therein that the means (9) for controlling the tilting of the burner (1) consists of a cam (9) tiltable about an axis (8) and being movable together with the burner (1) on the carrier (3) in the same manner, the curve (9a) of the cam running along a feeler (10).

4. Device according to claim 3 characterised therein, that the cam (9) is fixed at the tilting axis (8) of the burner (1).

## Revendications

1. Appareil de coupe de la paroi d'un tuyau (W) non déplacé par rapport à l'appareil, selon une surface de coupe (S) fermée au moyen d'un brûleur (1) qui est réglable sur un support (3) en direction radiale par rapport à un axe (A) de la surface de coupe (S) autour duquel tourne le support (3) pendant la coupe et dont la direction d'axe (B) peut pivoter dans un plan passant par le support (3) et l'axe de rotation (A), caractérisé par le fait qu'il comporte un dispositif (7) pour déplacer le brûleur (1) sur le support (3) dans ladite direction radiale, un dispositif (11) de commande de ce dispositif (7) en fonction de la rotation du brûleur (1) et un dispositif (9) pour l'orientation de la direction d'axe (B) du brûleur (1) en fonction dudit déplacement radial du brûleur selon un programme prédéterminé de manière que, en direction de l'axe du brûleur, la pointe (1a) du brûleur (1) soit maintenue à une distance constante d'une surface du tuyau (W).

2. Appareil selon la revendication 1, caractérisé par le fait qu'il comporte en outre un dispositif (12) pour avancer le brûleur (1) transversalement à la direction du support (3).

3. Appareil selon l'une des revendications 1 et 2, caractérisé par le fait que le dispositif (9) pour commander le mouvement de pivotement du brûleur (1) est constitué par une came qui peut pivoter autour d'un axe (8) et qui est déplacée pendant le déplacement longitudinal du brûleur (1) sur le support (3) de la même manière et dont la courbe (9a) se déplace sur un palpeur (10).

4. Appareil selon la revendication 3, caractérisé par le fait que la came (9) est calée sur l'axe de pivotement (8) du brûleur (1).

# Fig.1

0 036 571

Fig. 2

Fig. 3